**Europäisches Patentamt**

**European Patent Office**

**Office européen des brevets**

(19)

(11) Veröffentlichungsnummer: **0 200 102**
**B1**

(12)     **EUROPÄISCHE PATENTSCHRIFT**

(45) Veröffentlichungstag der Patentschrift: **23.01.91**

(51) Int. Cl.⁵: **C 01 F 7/00**, C 02 F 1/52

(21) Anmeldenummer: **86105303.1**

(22) Anmeldetag: **17.04.86**

(54) Verfahren zur Herstellung fester Aluminiumchlorid-Zusammensetzungen.

(30) Priorität: **27.04.85 DE 3515341**

(43) Veröffentlichungstag der Anmeldung:
**05.11.86 Patentblatt 86/45**

(45) Bekanntmachung des Hinweises auf die
Patenterteilung:
**23.01.91 Patentblatt 91/04**

(84) Benannte Vertragsstaaten:
**AT BE CH DE FR GB IT LI NL SE**

(56) Entgegenhaltungen:
**DE-A-2 263 333**
**DE-C-2 418 416**
**DE-C-2 449 100**
**US-A-4 390 445**

(73) Patentinhaber: **Kali-Chemie Aktiengesellschaft
Postfach 220, Hans-Böckler-Allee 20
D-3000 Hannover 1 (DE)**

(72) Erfinder: **Dötsch, Werner, Dr. rer. nat.
Kreuzgasse 3
D-5462 Bad Hönningen (DE)**
Erfinder: **Siegel, Rudolf
Kurt-Schumacher-Strasse 8
D-5450 Neuwied 13 (DE)**

(74) Vertreter: **Lauer, Dieter, Dr.
c/o Kali-Chemie Aktiengesellschaft Postfach 220
D-3000 Hannover 1 (DE)**

Courier Press, Leamington Spa, England.

EP 0 200 102 B1

EP 0 200 102 B1

**Beschreibung**

Die Erfindung betrifft ein Verfahren zur Herstellung fester Aluminiumchlorid-Zusammensetzungen.

Lösungen von Aluminiumsalzen wie beispielsweise Aluminiumsulfat oder basische Aluminiumsalze werden in großem Umfangs für die Reinigung und Aufbereitung von Abwasser, Grundwasser usw. als Wasserbehandlungsmittel verwendet. Von den basischen Aluminiumsalzlösungen zeigen basische Aluminiumchloridsalzlösungen eine gute wasserklärende Wirkung in weiten pH-und Temperaturbereichen.

Die Herstellung stabiler Lösungen von basischen sulfathaltigen Aluminiumchlorid-Zusammensetzugen wird beispielsweise in der DE—OS—24 18 416 beschrieben. In dieser Vorveröffentlichung werden eine ganze Reihe von vorbekannten Verfahren zur Herstellung von Lösungen von basischen Aluminiumsalzen beschrieben, die aber alle sehr aufwendig sind oder aber Produkte mit unbefriedigenden Eigenschaften liefern. Das Verfahrensprodukt der DE—OS—24 18 416 selbst liefert zwar befriedigende Ergebnisse bei der Wasserbehandlung. Das Verfahren zu seiner Herstellung ist aber ebenfalls aufwendig. Außerdem wäre es wünschenswert, eine feste Substanz herzustellen um Probleme zu vermeiden, die bei der Konfektionierung und Beförderung von Lösungen entstehen. Versuche aus der Lösung, die entsprechend DE—OS—24 18 416 hergestellt wurde, durch Eindampfen einen Feststoff zu erhalten, führten aber zu einem Produkt mit verschlechterten Kläreigenschaften.

Aufgabe der Erfindung ist es daher, ein einfaches Verfahren zur Verfügung zu stellen, das eine entsprechende feste, kaltwasserlösliche Zusammensetzung liefert, die sich durch gute Kläreigenschaft auszeichnet.

Diese Aufgabe wird durch das in den Patentansprüchen wiedergegebene Verfahren gelöst.

Das erfindungsgemäße Verfahren zur Herstellung fester, kaltwasserlöslicher, sulfathaltiger Aluminiumchlorid-Zusammensetzungen ist dadurch gekennzeichnet, daß man in einen Sprühtrockner Alkalialuminat, Schwefelsäure, Salzsäure und Aluminiumoxidhydrat einführt und den resultierenden Feststoff abtrennt.

Es ist zwar bereits aus der DE—OS—24 49 100 bekannt, fertige Lösungen von Aluminiumoxidchloriden durch Zerstäuben zu festen Produkten zu verarbeiten. Die dort einzusetzenden Lösungen werden aber nach einem aufwendigen, genau einzuhaltenden Verfahren hergestellt und es hat keineswegs nahegelegen, von dem dort aufgezeigten Verfahren abzuweichen und die Reaktion selbst in der erfindungsgemäßen Form durchzuführen.

Die für die Reaktion einzusetzenden Komponenten sind von üblicher technischer Qualität. Das Alkalialuminat wird vorzugsweise kurz vor der Reaktion frisch zubereitet durch Umsetzung von Aluminiumsalz, wie beispielsweise Aluminiumsulfat, mit überschüssigem Alkalihydroxid. Als Alkalihydroxid können beispielsweise Natrium- oder Kaliumhydroxid verwendet werden.

Als Aluminiumoxidhydrat kann handelsübliche Ware eingesetzt werden. Es ist aber auch möglich, beispielsweise durch Fällung von Aluminiumsalz-Lösung mit Alkalien wie Ammoniak oder maximal stöchiometrischen Mengen an Alkalihydroxid, Aluminiumoxidhydrat vor der Reaktion selber zu bereiten.

Für die Umsetzung werden die Reaktionskomponenten in wässriger Lösung bzw. als wässrige Suspension in einen Sprühtrockner eingeführt, wobei in einer bevorzugten Variante Alkalialuminat und Säuren voneinander getrennt eingeführt werden. Das Aluminiumoxidhydrat kann entweder als dritte Komponente über eine getrennte Zuführung in den Sprühtrockner eingeführt werden, oder aber gemeinsam mit dem Alkalialuminat und/oder den Säuren. In einer bevorzugten Ausführungsform wird das Alkalialuminat getrennt von den übrigen Komponenten in den Sprühtrockner eingeführt.

Zur Durchführung des erfindungsgemäßen Verfahrens können Sprühtrockner üblicher Bauart mit Zerstäubungsdüsen oder rotierenden Zerstäubungselementen eingesetzt werden. Bevorzugt wird der Einsatz von Düsen. Diese können an verschiedenen Stellen des Sprühtrockners derart angebracht sein, daß die eingesprühten Stoffströme im Sprühtrockner aufeinandertreffen. In einer besonderen Variante wird eine einzige Düse mit mehreren konzentrisch angeordneten Einsprühkanälen (Mehrstoffdüse) verwendet.

Das Mischungsverhältnis der Reaktionspartner kann in weiten Bereichen variiert werden. Bewährt haben sich Verfahren, bei denen man die Reaktionskomponenten derart dosiert, daß pro Mol Sulfat 0,2—5,0 Mol, vorzugsweise 0,8—4,5 Mol $Al_2O_3$ und 1,0—9,0 Mol, vorzugsweise 4,5—9,0 Mol Chlorid in den Sprühtrockner eingeführt werden.

Eine besonders bevorzugte Variante ist dadurch gekennzeichnet, daß der Gesamtteil an $Al_2O_3$ der in den Sprühtrockner eingeführt wird zu 30 bis 40 Gew.-% aus der Aluminat-Lösung und zu 60—70 Gew.-% aus der Feuchthydrat-Suspension stammt.

Der Sprühtrockner wird bei an sich üblichen Temperaturen betrieben. Besonders bewährt haben sich Ablufttemperaturen im Bereich von 90—150°C, vorzugsweise 100—130°C.

Die Abtrennung des resultierenden Feststoffes erfolgt in an sich bekannter Weise, indem der den Sprühtrockner verlassende Strom in Windkessel, Zyklone oder andere bekannte Abscheidungsvorrichtungen eingeleitet wird.

Nach dem erfindungsgemäßen Verfahren wird eine feste, kaltwasserlösliche, sulfathaltige Aluminiumchlorid-Zusammensetzung erhalten, die gut lagerfähig ist und für die Reinigung und Aufbereitung von Abwasser gut verwendbar ist. Für diesen Zweck kann entweder Feststoff als solcher in das zu behandelnde Abwasser eindosiert werden oder es kann vorher eine wässrige Lösung hergestellt

2

werden, die dem Abwasser zudosiert wird. Bei Dosierung im üblichen Bereich von 0,01—10, insbesondere 0,05—5 Promille (Masse Feststoff/Volumen Abwasser) werden sehr gute Ergebnisse erzielt.

Das folgende Beispiel soll das erfindungsgemäße Verfahren näher beschreiben, ohne seinen Umfang zu begrenzen.

Beispiel 1

Zur Einspeisung in einen Technikums-Sprühtrockner mit Zweistoff-Einspritzdüse (konzentrische Einspritzung) wurden folgende Lösungen zubereitet.

Lösung a1 (Säurekomponente)

508 g Wasser +47 g Schwefelsäure (d=1,81 g/ml)+696 g Salzsäure (d=1,18 g/ml)+161 g Feuchthydrat (handelsübliche Ware mit 56 Gew.-% $Al_2O_3$).

Lösung a2 (Säurekomponente)

Wie Lösung a1, aber nur mit 254 g Wasser.

Lösung b (Aluminatkomponente)

300 g Wasser +91 g Natriumaluminat (handelsübliche Ware mit 53 Gew.-% $Al_2O_3$).

Die Lösungen a1 bzw. a2 und b wurden kontinuierlich in den in der nachfolgenden Tabelle angegebenen Volumenvorhältnissen und bei der angegebenen Ablufttemperatur (°C) in den Sprühtrockner eingesprüht. Der den Sprühtrockner verlassende Strom wurde in einen Windkessel eingespeist, aus dem kontinuierlich festes Reaktionsprodukt gleichbleibender Zusammensetzung gewonnen wurde, das gut für die Abwasserbehandlung eingesetzt werden konnte wie die folgenden Versuche zeigen.

|  | Volumenverhältnis | | | |
| --- | --- | --- | --- | --- |
| Versuche | a1 | a2 | b | T Abluft |
| 10 | 51 | — | 12 | 110—120 |
| 11 | 51 | — | 12 | 133 |
| 12 | — | 11 | 3,7 | 115 |
| 13 | — | 11 | 3,7 | 131 |
| 14 | — | 11 | 3,7 | 116 |
| 15 | — | 11 | 3,7 | 128 |

Kommunales Abwasser wurde aus einer Abwasseraufbereitungsanlage hinter der Rechenanlage entnommen. Jeweils 0,5 l davon wurde mit je 0,2 g (berechnet als wasserfreie Substanz) folgender Aluminiumchlorid-Zusammensetzung behandelt.

A=Lösung, hergestellt entsprechend DE—OS—24 18 416.

Beispiel 1

b=Lösung, hergestellt entsprechend DE—OS—24 49 100.

Beispiel 5

C=erfindungsgemäßes Produkt aus Versuch.

Zur Bewertung der Kläreigenschaften wurde das Abwasser unmittelbar nach Dosierung der Zusammensetzungen A bis C in einen 500 ml Standzylinder (Durchmesser 5 cm) eingegossen und nach 10 Minuten Standzeit die Höhe des trüben Bodensatzes gemessen, der von der ansonsten klaren, überstehenden Lösungen separierte. Es wurden folgende Ergebnisse erzielt:

| Probe | Bodensatz |
| --- | --- |
| A | 7,1 cm (140 ml) |
| B | 3,8 cm (75 ml) |
| C | 2,5 cm (50 ml) |

Das erfindungsgemäße Produkt C zeigt die besten Kläreigenschaften. Es muß als überraschend

3

## EP 0 200 102 B1

angesehen werden, nach einem technisch sehr viel einfacheren Verfahren ein überlegenes Produkt zu erhalten.

**Patentansprüche**

1. Verfahren zur Herstellung fester, kaltwasserlöslicher, sulfathaltiger Aluminiumchlorid-Zusammensetzungen, dadurch gekennzeichnet, daß man in einen Sprühtrockner Alkalialuminat, Schwefelsäure, Salzsäure und Aluminiumoxidhydrat einführt und den resultierenden Feststoff abtrennt.

2. Verfahren nach Anspruch 1 dadurch gekennzeichnet, daß man Alkalialuminat-Lösung getrennt von den übrigen Komponenten in den Sprühtrockner einführt.

3. Verfahren nach einem der vorhergehenden Ansprüche, dadurch gekennzeichnet, daß man die Reaktionskomponenten derart dosiert, daß pro Mol Sulfat 0,2—5,0 Mol, vorzugsweise 0,8—4,5 Mol $Al_2O_3$ und 1,0—9,0 Mol, vorzugsweise 4,5—9,0 Mol Chlorid in den Sprühtrockner eingeführt werden.

4. Verfahren nach einem der vorhergehenden Ansprüche, dadurch gekennzeichnet, daß der Gesamtanteil an $Al_2O_3$ der in den Sprühtrockner eingeführt wird zu 30 bis 40 Gew.-% aus der Aluminat-Lösung und zu 60 bis 70 Gew.-% aus der Feuchthydrat-Suspension stammt.

5. Verfahren nach einem der vorhergehenden Ansprüche, dadurch gekennzeichnet, daß man die Sprühtrocknung bei einer Ablufttemperatur im Bereich von 90—150°C, vorzugsweise 100—135°C vornimmt.

6. Verwendung des nach einem der Verfahren der Ansprüche 1 bis 5 hergestellten Aluminiumchlorids bei der Abwasserbehandlung.

**Revendications**

1. Procédé pour la préparation de compositions de chlorure d'aluminium sulfatées solides, solubles dans l'eau froide, caractérisé en ce que l'on introduit dans un sécheur atomiseur un aluminate alcalin, de l'acide sulfurique, de l'acide chlorhydrique et de l'oxyde d'aluminium hydraté, et on sépare le solide résultant.

2. Procédé selon la revendication 1, caractérisé en ce que l'on introduit dans le séch eur atomiseur la solution d'aluminate alcalin séparément des autres composants.

3. Procédé selon l'une des revendications précédentes, caractérisé en ce que l'on ajoute de façon réglée les partenaires réactionnels de manière à introduire dans le sécheur atomiseur 0,2—5,0 moles, de préférence 0,8—4,5 moles d'$Al_2O_3$ et 1,0—9,0 moles, de préférence 4,5—9,0 moles de chlorure par mole de sulfate.

4. Procédé selon l'une des revendications précédentes, caractérisé en ce que la quantité totale d'$Al_2O_3$ qui est introduite dans le sécheur atomiseur provient à raison de 30 à 40% en poids de la solution d'aluminate et à raison de 60 à 70% en poids de la suspension d'hydrate humide.

5. Procédé selon l'une des revendications précédentes, caractérisé en ce que l'on effectue le séchage par atomisation à une température de l'air évacué dans la plage à 90 à 150°C, de préférence de 100 à 135°C.

6. Utilisation du chlorure d'aluminium préparé selon l'un des procédés des revendications 1 à 5, dans le traitement d'eaux usées.

**Claims**

1. Process for preparing solid sulphate-containing aluminium chloride compositions which are soluble in cold water, characterised in that alkali aluminate, sulphuric acid, hydrochloric acid and aluminium oxide hydrate are introduced into a spray dryer and the resulting solid is separated off.

2. Process according to Claim 1, characterised in that alkali aluminate solution is introduced into the spray dryer separately from the other constituents.

3. Process according to one of the preceding Claims, characterised in that the reaction constituents are metered in such a manner that 0.2—5.0 mol, preferably 0.8—4.5 mol, $Al_2O_3$ and 1.0—9.0 mol, preferably 4.5—9.0 mol, chloride per mol sulphate are introduced into the spray dryer.

4. Process according to one of the preceding Claims, characterised in that 30 to 40% by weight of the total content of $Al_2O_3$ which is introduced into the spray dryer comes from the aluminate solution and 60—70% by weight from the moist hydrate suspension.

5. Process according to one of the preceding Claims, characterised in that the spray drying is carried out at an exhaust air temperature in the range of 90—150°C, preferably 100—135°C.

6. Use of the aluminium chloride prepared according to one of the processes of Claims 1 to 5 for the treatment of waste water.